# EUROPEAN PATENT APPLICATION

(11) **EP 4 837 818 A1**
(43) Date of publication of application: **11.11.2026**
(21) Application number: 26172814.1
(22) Date of filing: 16.04.2026
(51) Int. Cl.: B62B 7/14, B62B 9/10, B62B 7/06

(54) **FOLDABLE STROLLER**

(30) Priority: 08.05.2025 IT 202500010398
(71) Applicant: Artsana S.p.A., 22070 Grandate (CO) (IT)
(72) Inventor: Anselmi, Lorenzo, 22070 Grandate CO (IT); Travaglini, Paolo, 22070 Grandate CO (IT)
(74) Representative: Perani & Partners S.p.A.

(57) **Abstract**

A foldable stroller (P) and a seat (1) comprising a connector (5) hookable to and unhookable from a hooking portion (G) of the frame (T) and adapted to operate the unlocking and closing of the frame (T), a backrest frame (2), a sleeve frame (3) and a seat base (4), each configured with a respective rotation portion (6, 11, 13) rotatably connected to the connector (5); the upper end of the backrest frame (2) comprises a control element (2a) for the backrest frame (2); the connector (5) comprises a pin (7) sliding along an axial direction (X-X) towards the outside of the connector (5) and capable of elastic recovery; the rotation portion (6) of the backrest frame (2) comprises a cam (8) configured to push the pin (7) in the axial direction (X-X) towards the outside of the connector (5) to press the unlocking element (L) so as to operate the unlocking and closing of the frame (T) of the stroller (P) while the backrest frame (2) rotates towards the seat base (4).

## Description

### FIELD OF THE INVENTION

The present invention relates to a foldable stroller for children provided with a seat of the type hookable to and unhookable from the stroller frame, and adapted to operate the unlocking and closing of the stroller frame when the same seat is closed.

### Background art

It is known in the art to provide a stroller whose seat is hookable to and unhookable from the frame of a stroller. It is also known to provide a seat that, by closing, is able to operate the closing of the stroller frame, so that the seat and the frame can be closed together.

In the known art, the seat operates the unlocking of the frame during the rotation of the seat itself with respect to the frame. The rotation of the seat with respect to the frame allows the exposure of an unlocking element which, by pressing the unlocking lever present on the frame, causes the closing of the frame itself.

The seat described in document EP4474242A1 is also known, in addition to the corresponding foldable stroller frame on which the seat, which is instead described in document EP4474243A1, can be hooked. Said seat, when hooked to the frame, can be rotated by operating a specific unlocking button, so as to close the seat and at the same time operate the mechanism that unlocks the frame, causing its closure. The seat and the stroller frame are therefore able to be closed together.

### SUMMARY OF THE INVENTION

An object of the present invention is to provide a stroller whose seat is able to provide an alternative solution to those present in the known art.

In particular, an object of the invention is to provide a stroller having a seat provided with a frame unlocking system alternative to the known one that allows for an optimal closing of the stroller.

The specified technical task and the specified objects are substantially achieved by a stroller comprising the technical characteristics set forth in one or more of the appended claims.

### Advantages of the invention

Thanks to an embodiment, it is possible to obtain a stroller whose seat is hookable to and unhookable from a stroller frame and suitable for activating its automatic closing in a practical and reliable way.

Thanks to an embodiment, it is possible to provide a stroller whose reclosable seat is able to operate the closing of the frame by means of a frame unlocking system alternative to known systems..

### BRIEF DESCRIPTION OF THE DRAWINGS

The characteristics and advantages of the present invention will be evident from the following detailed description of a possible practical embodiment, illustrated by way of non-limiting example in the set of drawings, in which:
- figure 1a shows a perspective view of a stroller for children provided with the seat according to the present invention,
- figure 1b shows a side view of the stroller of figure 1a in the open use configuration,
- figure 1c shows a side view of the stroller of figure 1a in the open use configuration, with the seat in the closing phase,
- figure 2 shows a side view of the stroller of figure 1a with a detail in section of the seat in a first configuration,
- figure 3 shows a drawing of the stroller of figure 2 with a detail in section of the seat in a second configuration,
- figure 4a shows a schematic detail drawing of the box indicated in figure 2,
- figure 4b shows a schematic detail drawing of the box indicated in figure 3,
- figure 5 shows a perspective view of the stroller for children of figure 1a in the closing phase,
- figure 6 shows a side view of the stroller for children of figure 1a in the closed position,
- figure 7 shows an exploded perspective view of a detail of a seat of the stroller according to the present invention,
- figure 8 shows a perspective view of a detail of a known type of stroller frame, on which the seat of figures 2, 3 and 7 is hookable,
- figure 9 shows a perspective view of a detail of a stroller for children with a known type of frame, and in particular of the hooking zone between the frame of figure 8 and the seat of figures 2, 3 and 7,
- figure 10 shows a cross-sectional view of a detail of the seat of figures 2, 3 and 7.

The stroller illustrated in the appended figures is to be understood as represented schematically, not necessarily to scale and not necessarily with the represented proportions between the various constituent elements.

### DETAILED DESCRIPTION

With reference to the appended figures, the present invention relates to a reclosable stroller P.

The stroller P comprises a reclosable frame T comprising a hooking portion G provided with an unlocking element L pressable to initiate the unlocking and closing of the frame T.

The stroller P comprises a seat 1 comprising a connector 5 hookable to and unhookable from the hooking portion G of the frame T and adapted to operate the unlocking and closing of the frame T. In other words, the seat 1 is hookable to and unhookable from the frame T of a reclosable stroller P, adapted to operate the unlocking and closing of the frame T of the stroller P.

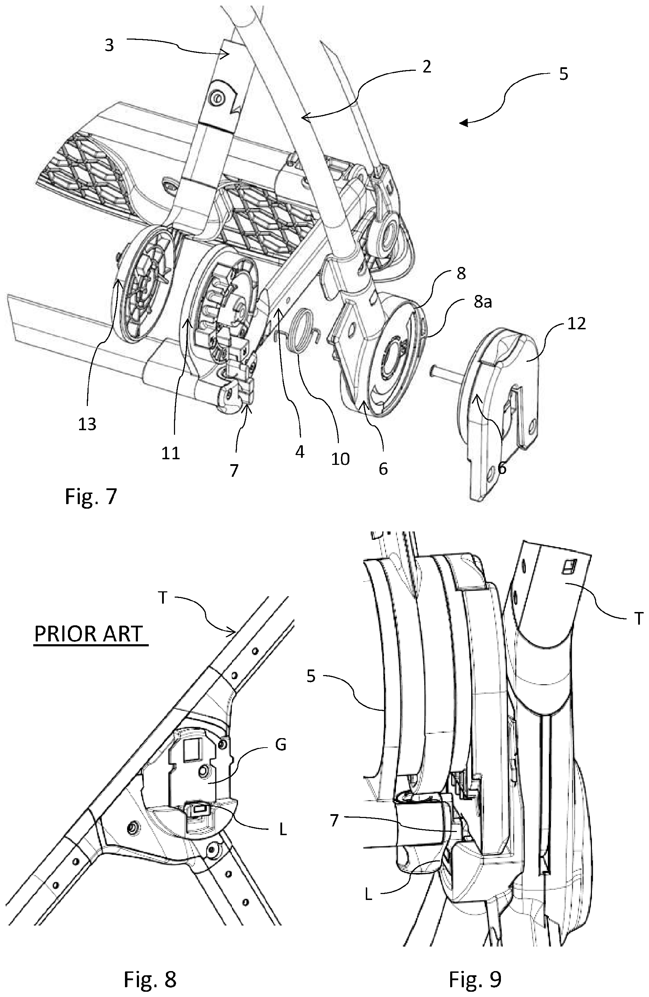

It should be specified here that the frame T is of a known type, as for example described in documents EP4474242A1 and EP4474243A1, that is, a frame T provided with an unlocking element L (figures 8 and 9) directly operable from the closing of the seat 1, to obtain a synchronous closing of the seat 1 and the frame T, so as to fold the stroller P with a single gesture of the user.

The seat 1 also comprises a backrest frame 2, a sleeve frame 3, and a seat base 4. As is known in the art, the backrest frame 2 is suitable for defining the backrest of the seat 1 when covered with padding. The sleeve frame 3 defines the support and protection zone for the child. Furthermore, the seat base 4 defines the seat of the seat when covered with padding. The connector 5 is preferably provided with two hooking points (indicated with 12 in the following) arranged on the sides of the seat 1 thanks to which it is hookable to and unhookable from the frame T of the stroller P at two corresponding lateral hooking points (indicated with G in the following) of the frame T. The backrest frame 2, the sleeve frame 3 and the seat base 4 are rotatably connected to the connector 5, preferably on the two sides of the connector 5, as is known in the art, for example as described in documents EP4474242A1 and EP4474243A1. In other words, the backrest frame 2 can rotate with respect to the connector 5 to recline the backrest of the seat. Furthermore, the backrest frame 2, the sleeve frame 3 and the seat base 4 can rotate together with respect to the connector 5 during the closing of the seat, when the frame T folds to close the stroller P.

For the sake of brevity, reference will sometimes be made in the following to details of the seat 1 of the frame T which concern the known art, and in particular the known type of strollers P described in documents EP4474242A1 and EP4474243A1. Such known characteristics will therefore not be detailed as they are mentioned to contextualize the invention.

The backrest frame 2, the sleeve frame 3 and the seat base 4 are each configured with a respective rotation portion 6, 11 and 13 rotatably connected to the connector 5. Specifically, the rotation portion 6, 11 and 13 is configured with a disc-like conformation to be rotatable with respect to the connector 5. Preferably, each rotation portion 6, 11 and 13 comprises two disc-shaped elements arranged laterally to be rotatably connected to the connector 5, as is known in the art.

The upper end of the backrest frame 2 comprises a control element 2a operable to adjust the different inclination of the backrest frame 2 in the rearward direction with respect to the connector 5, as is known in the art. The control element 2a is also operable to rotate the backrest frame 2 forward to join the sleeve frame 3 in the rotation towards the seat base 4, also in this case as is known in the art. Preferably, the control element 2a is rotatable to adjust the different inclination of the backrest frame 2 in the rearward direction and is also rotatable to rotate the backrest frame 2 forward to join the sleeve frame 3 in the rotation towards the seat base 4. The reclining system of the seat 1, which can be realized in various ways according to the known art, is not described here in detail as it is not limiting for the present invention. By way of example, the control element 2a can be rotatable and/or pressable to operate, by means of cables that run inside the backrest frame 2, the unlocking of the rotation of the backrest frame 2 with respect to the connector 5, in particular by means of a movable pin which is disengaged by means of the cables from respective seats obtained in the rotation portion 11 and arranged radially to adjust the various angles and therefore the different reclining positions of the backrest frame 2.

The connector 5 comprises a pin 7 sliding along an axial direction X-X towards the outside of the connector 5 and capable of elastic recovery. It is worth noting that there can be two pins 7, arranged respectively on the two sides of the connector 5 in correspondence with the hooking zones to the frame T.

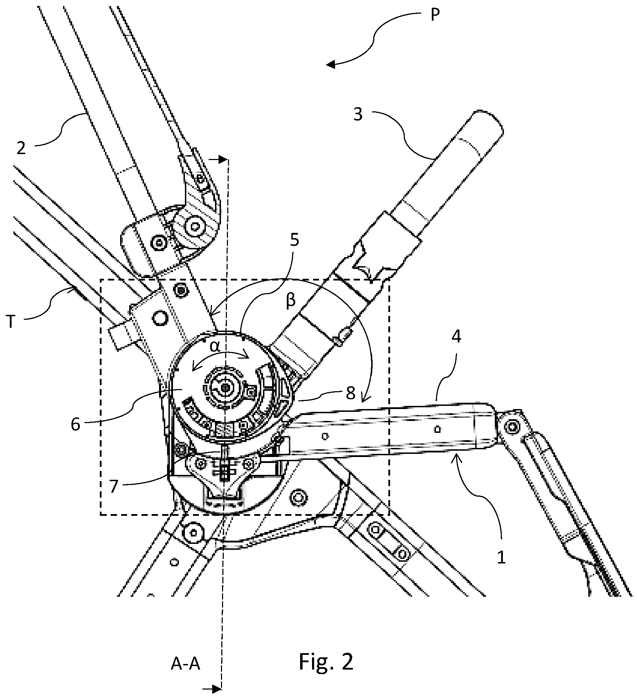

The rotation portion 6 of the backrest frame 2 comprises a cam 8 configured to push the pin 7 in the axial direction X-X towards the outside of the connector 5 to press the unlocking element L so as to operate the unlocking and closing of the frame T of the stroller P while the backrest frame 2 rotates towards the seat base 4, the latter remaining fixed. In other words, when the backrest frame 2, by activating the control element 2a, rotates towards the seat base 4, the rotation of the rotation portion 6 of the backrest frame determines the rotation of the cam 8 which is integral with the rotation portion 6. The cam 8, thanks to its particular conformation, by rotating acts on the pin 7 so that by protruding towards the outside of the connector 5 it can operate the unlocking of the frame T, as shown in figures 2, 3, 4a and 4b.

The technical solution of the invention advantageously allows the frame T to be automatically unlocked and thus the stroller to be closed, during the forward reclining of the backrest frame 2 towards the seat base 4, i.e. before the seat base 4 is also free to rotate with respect to the connector 5. This confers greater stability, safety and fluidity in the folding phase of the stroller P.

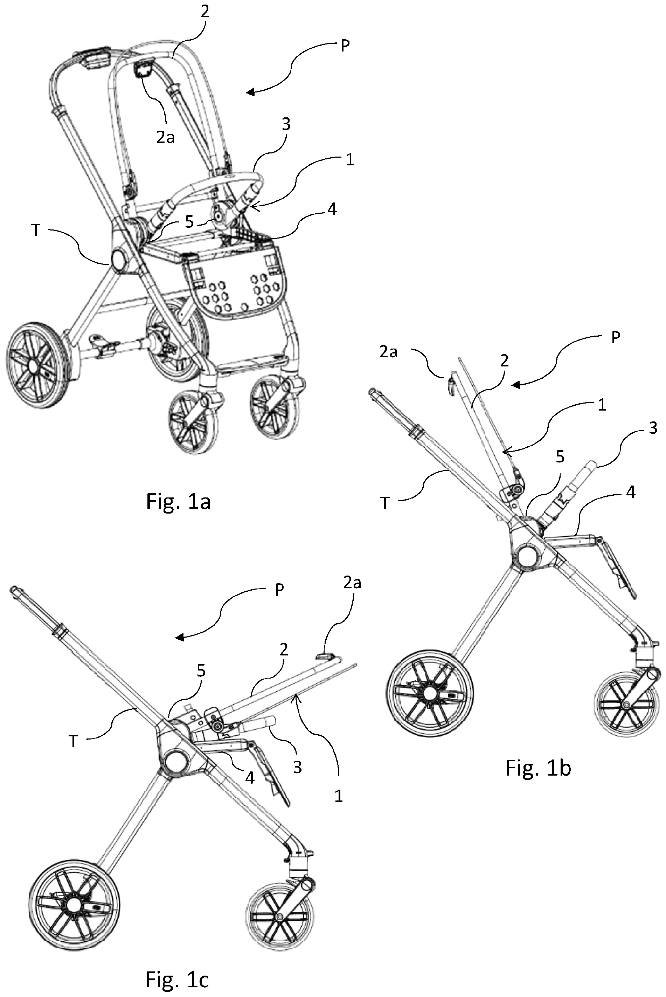

According to a preferred solution, the cam 8 is configured to push the pin 7 in the axial direction X-X towards the outside of the connector 5 to press the unlocking element L so as to operate the unlocking and closing of the frame T of the stroller P when, starting from a rest/start position of the backrest frame 2 (figures 1a, 1b, 2 and 4a), the swept angle α of the backrest frame 2 during the rotation of the same backrest frame 2 towards the seat base 4, which remains fixed in this phase, reaches a first predefined threshold value (figures 2, 3, 4a and 4b). Preferably, the backrest frame 2 and the sleeve frame 3 rotate together towards the seat base 4 when the swept rotation angle α of the backrest frame 2 during the rotation of the same backrest frame 2 towards the seat base 4 exceeds a second predefined threshold value. Always preferably, the first predefined threshold value is greater than the second predefined threshold value. In other words, as is known in the art, the control element 2a can provide for two movements, for example it can be rotatable to recline the backrest frame 2 and can comprise a pressable button to unlock the further rotation of the control element 2a so that the rotation of the sleeve frame 3 can also be allowed. A solution of this type is described in detail in the aforementioned prior documents.

In other words, the cam 8 is configured to push the pin 7 in the axial direction X-X towards the outside of the connector 5 to operate the unlocking and closing of the frame T of the stroller P when, during the rotation of the same backrest frame 2 towards the seat base 4, which remains fixed in this phase, the functional angle β defined between the same backrest frame 2 and the seat base 4, reducing, reaches a first angle value (figures 2, 3, 4a and 4b). Preferably, the backrest frame 2 and the sleeve frame 3 rotate together towards the seat base 4 when, during the rotation of the same backrest frame 2 towards the seat base 4, the functional angle β, reducing, reaches a second angle value. Always preferably, the second angle value is greater than the first angle value. It is worth noting that, in the rotation of the backrest frame 2 towards the seat base 4, the value of the functional angle β is reduced until it reaches the second angle value, in which the sleeve frame 3 also begins to rotate towards the seat base 4. During the further rotation of the backrest frame 2 towards the seat base 4, and therefore in the movement of approach of the backrest frame 2 (and of the sleeve frame 3) towards the seat base 4, the functional angle β is further reduced, reaching the first angle value at which the cam 8 is configured to push the pin 7.

More preferably, the first angle value of the functional angle β defined between the backrest frame 2 and the seat base 4 is between 28° and 34°, preferably it is 31°. Always preferably, the second angle value of the functional angle β defined between the backrest frame 2 and the seat base 4 is between 63° and 69°, preferably it is 66°.

In accordance with a preferred form of the invention, the connector 5 allows the simultaneous rotation of the backrest frame 2, the sleeve frame 3 and the seat base 4 with respect to the connector 5 itself when the backrest frame 2 and the sleeve frame 3 by rotating couple with the seat base 4. The coupling of the backrest frame 2 and the sleeve frame 3 with the seat base 4 preferably occurs when the swept rotation angle α of the backrest frame 2 during the rotation of the same backrest frame 2 towards the seat base 4 exceeds a third predefined threshold value, greater than the first predefined threshold value.

In other words, the coupling of the backrest frame 2 and the sleeve frame 3 with the seat base 4 preferably occurs when, during the further rotation of the same backrest frame 2 towards the seat base 4, the functional angle β, reducing, reaches a third angle value, lower than the first angle value, preferably between 21° and 27°, more preferably it is 24°. It is worth noting that during the further rotation of the backrest frame 2 (and of the sleeve frame 3) towards the seat base 4, and therefore in the movement of approach of the backrest frame 2 (and of the sleeve frame 3) towards the seat base 4 (which remains fixed in this phase), the functional angle β is further reduced, reaching the third angle value at which the rotation of the seat base 4 is unlocked and beyond which the simultaneous rotation of the backrest frame 2, the sleeve frame 3 and the seat base 4 with respect to the connector 5 is therefore realized. In this way, the seat 1 closes together with the frame T of the stroller P, the latter having already been unlocked at the first angle value of the functional angle β.

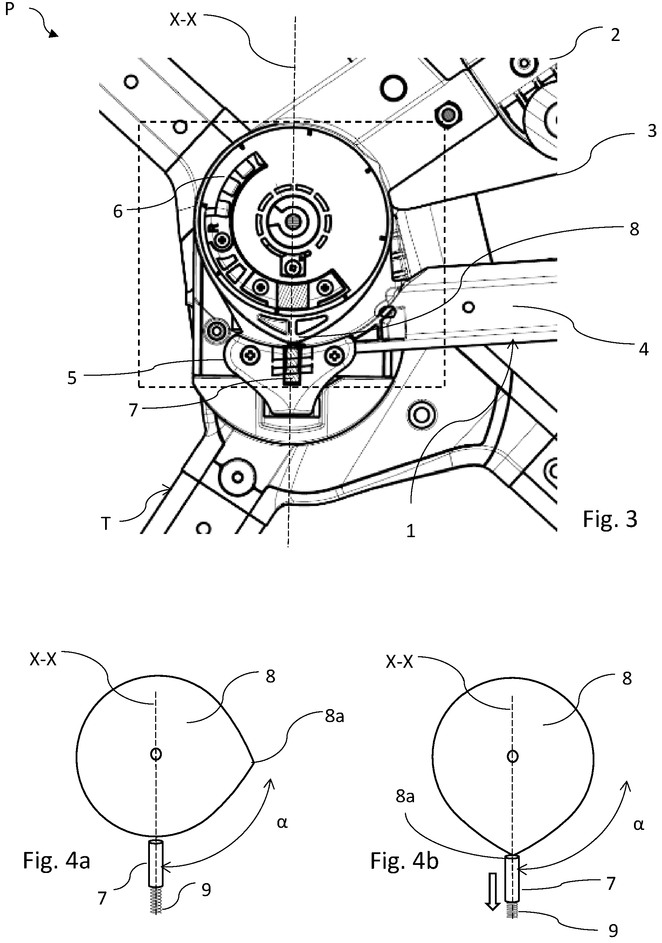

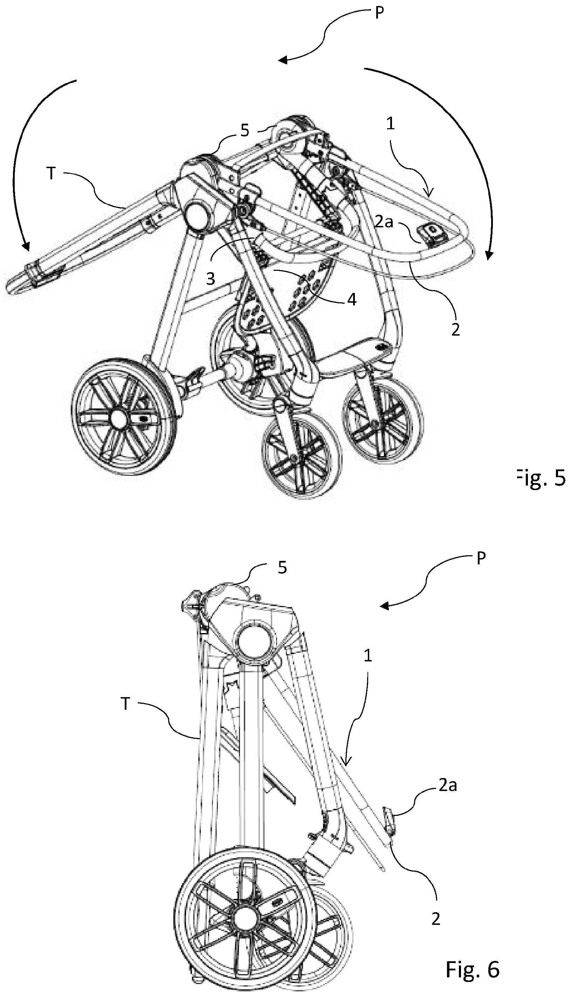

Preferably, the connector 5 comprises a torsion spring 10 active between the rotation portion 6 of the backrest frame 2 and the rotation portion 11 of the seat base 4 to facilitate the rotation of the backrest frame 2 towards the seat base 4 when the control element 2a is operated to rotate the backrest frame 2 forward. This advantageously allows for an easier closing of the stroller P. Preferably, the connector 5 comprises fixing elements of the torsion spring 10 between the rotation portion 6 of the backrest frame 2 and the rotation portion 11 of the seat base 4 capable of maintaining its correct preload when the seat 1 is open in the use configuration. The sleeve frame 3 also has a rotation portion 13 rotatable with respect to the connector 5. It is worth noting that the torsion spring 10 acts during the closing movement of the backrest frame 2, towards the seat base 4, also together with the sleeve frame 3 and, when they all couple together, as is known in the art, the seat base 4 also disengages in rotation with respect to the connector 5, allowing the integral rotation of the backrest frame 2, the sleeve frame 3 and the seat base 4 with respect to the connector 5. Therefore, the rotation of the closed seat 1 with respect to the frame T, clearly by means of the connector 5 which remains hooked to the frame T, occurs at a moment subsequent to the unlocking of the closing of the frame T operated by means of the combined action of the cam 8 and the pin 7. In other words, after the activation of the control element 2a, the cam 8 operates the pin 7 during the rotation of the backrest frame 2 and the sleeve frame 3 towards the seat base 4 which remains fixed (figure 3). Subsequently, the rotation of the backrest frame 2 continues together with the sleeve frame 3 towards the seat base 4 until the backrest frame 2 and the sleeve frame 3 couple with the seat base 4. This coupling, shown in figure 1c, also unlocks the rotation of the seat base 4, producing the synchronous closing of the frame T and the seat 1, resulting in the automatic folding of the stroller (figures 5 and 6).

According to the preferred solution of the invention, the cam 8 is integral with the rotation portion 6 of the backrest frame 2 and has an eccentric geometric conformation, preferably teardrop-shaped. In particular, the eccentric and in particular teardrop-shaped conformation has a protrusion 8a, conformed as a preferably pointed portion, visible for example in figures 4a and 4b. In other words, the conformation of the cam 8 is of a known type and has a substantially circular shape with a protruding portion and is therefore eccentric.

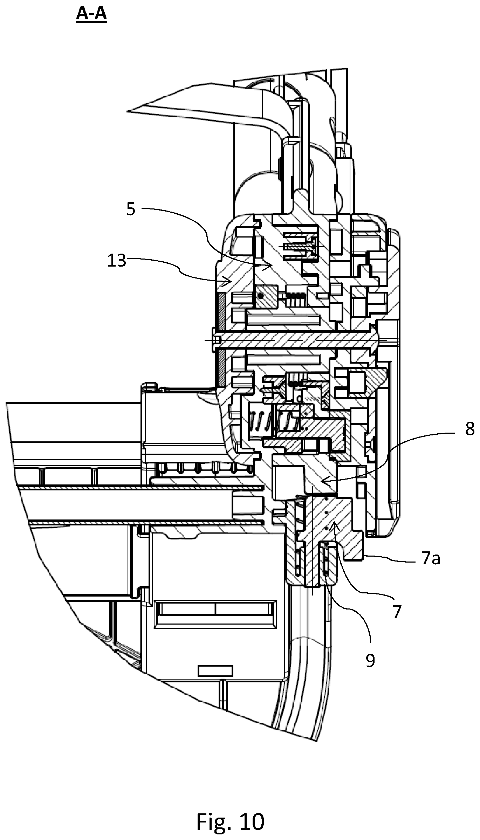

In accordance with a preferred solution, the connector 5 comprises a resilient return element 9 active on the pin 7 along the axial direction X-X to push it towards the inside of the connector 5. Preferably, the resilient return element 9 comprises a spring active on the pin 7, in which the pin 7 is conformed to be able to exert its activation action, by pressure, to allow the unlocking and closing of the frame T. A preferred conformation of the pin 7 is shown in figure 10, in which the spring 9 acts on the pin 7 which has a projecting portion 7a, configured to be able to act on the unlocking lever L of the frame T (figures 8 and 9).

As previously mentioned, the connector 5 has two hooking portions 12, like the one illustrated in the appended figures, arranged on the two sides of the seat 1 and intended to hook into two corresponding lateral seats G of the frame T, as is known in the art. In the embodiment illustrated in the appended figures, each of the two hooking portions 12 of the connector 5, which are substantially specular to each other, is intended to allow the rotation of the respective rotation portions 6, 11 and 13 and respectively comprises an assembly of pin 7 and cam 8, with the respective specifics described above, such as the resilient return element 9. The hooking portions 12, as is known in the art, comprise an unlocking button that allows the connector 5, and therefore the seat 1, to be unhooked from the frame T. Preferably, the hooking portions 12 and the respective lateral seats G of the frame T allow the seat 1 to be hooked both in the forward position and in the rearward position with respect to the frame T, also in this case as is known in the art.

As is known in the art, the connector 5 comprises a hooking element 12 for the frame T (figure 7), hookable to the respective hooking portion G of the frame T, visible in figure 8. Furthermore, in figures 8 and 9 the unlocking element L is shown, pressable by the pin 7 under the pushing action of the cam 8,which initiates the unlocking and closing of the frame T. It is worth noting once again that the reclosable frame T is a known type of frame, which folds when the unlocking element L is operated, and in particular for the present invention when the unlocking element L is pressed by the pin 7 of the seat 1 during the closing phase of the same seat

## Claims

1. Foldable stroller (P), comprising:
- a reclosable frame (T) comprising a hooking portion (G) provided with an unlocking element (L) pressable to initiate the unlocking and closing of the frame (T);
- a seat (1) comprising:
- a connector (5) hookable to and unhookable from the hooking portion (G) of the frame (T) and adapted to operate the unlocking and closing of the frame (T);
- a backrest frame (2), a sleeve frame (3) and a seat base (4), each configured with a respective rotation portion (6, 11, 13) rotatably connected to the connector (5), wherein the upper end of the backrest frame (2) comprises a control element (2a) operable to adjust the different inclination of the backrest frame (2) in the rearward direction, the control element (2a) is also operable to rotate the backrest frame (2) forward to join the sleeve frame (3) in the rotation towards the seat base (4);
**characterized in that**
- the connector (5) comprises a pin (7) sliding along an axial direction (X-X) towards the outside of the connector (5) and capable of elastic recovery;
- the rotation portion (6) of the backrest frame (2) comprises a cam (8) configured to push the pin (7) in the axial direction (X-X) towards the outside of the connector (5) to press the unlocking element (L) so as to operate the unlocking and closing of the frame (T) of the stroller (P) while the backrest frame (2) rotates towards the seat base (4).

2. Foldable stroller (P) according to claim 1, wherein the cam (8) is configured to push the pin (7) in the axial direction (X-X) towards the outside of the connector (5) to press the unlocking element (L) so as to operate the unlocking and closing of the frame (T) of the stroller (P) when the swept angle (α) of the backrest frame (2) during the rotation of the same backrest frame (2) towards the seat base (4) reaches a first predefined threshold value

3. Foldable stroller (P) according to claim 2, wherein the backrest frame (2) and the sleeve frame (3) rotate together towards the seat base (4) when the swept rotation angle (α) of the backrest frame (2) during the rotation of the same backrest frame (2) towards the seat base (4) exceeds a second predefined threshold value, the first predefined threshold value preferably being greater than the second predefined threshold value.

4. Foldable stroller (P) according to claim 3, wherein the connector (5) allows simultaneous rotation of the backrest frame (2), the sleeve frame (3) and the seat base (4) with respect to the connector (5) itself when the backrest frame (2) and the sleeve frame (3) by rotating couple with the seat base (4).

5. Foldable stroller (P) according to any one of the preceding claims, wherein the connector (5) comprises a torsion spring (10) active between the rotation portion (6) of the backrest frame (2) and the rotation portion (11) of the seat base (4) to facilitate rotation of the backrest frame (2) towards the seat base (4) when the control element (2a) is operated to rotate the backrest frame (2) forward.

6. Foldable stroller (P) according to any one of claims 2 to 5, wherein the first threshold angle value of the functional angle (β) defined between the backrest frame (2) and the seat base (4) at the first threshold value of the angle (α) is between 28° and 34°, preferably 31°.

7. Foldable stroller (P) according to any one of the preceding claims, wherein the cam (8) is integral with the rotation portion (6) of the backrest frame (2).

8. Foldable stroller (P) according to any one of the preceding claims, wherein the control element (2a) is rotatable to adjust the different inclination of the backrest frame (2) in the rearward direction and is also rotatable to rotate the backrest frame (2) forward to join the sleeve frame (3) in rotation towards the seat base (4).

9. Foldable stroller (P) according to any one of the preceding claims, wherein the connector (5) comprises a resilient return element (9) acting on the pin (7).
